# EUROPEAN PATENT APPLICATION

(11) **EP 3 923 284 A1**
(43) Date of publication of application: **15.12.2021**
(21) Application number: 21189133.8
(22) Date of filing: 12.02.2014
(51) Int. Cl.: G11B 27/031, G11B 27/34, G06F 16/60

(54) **CONTENT SELECTION DEVICE, AND CONTROL METHOD AND PROGRAM FOR CONTENT SELECTION DEVICE**

(62) Divisional of application: 14882450.1
(71) Applicant: AlphaTheta Corporation, Nishi-ku, Yokohama-shi Kanagawa 220-0012 (JP)
(72) Inventor: MASHITA, Takashi, Kawasaki-shi, Kanagawa, 212-0031 (JP); NITTA, Takafumi, Kawasaki-shi, Kanagawa 212-0031 (JP)
(74) Representative: Gille Hrabal Partnerschaftsgesellschaft mbB Patentanwälte

(57) **Abstract**

An object of the invention is to provide a contents processing device configured to allow a DJ to efficiently select music during a performance and in a preparatory work, a processing method of the contents processing device, and a program therefor. The contents processing device of the invention in a form of a PC (1) includes: a display unit (120) configured to display a plurality of playlists on a single screen, each of the playlists including contents information regarding contents; a display controller (110) configured to control the display unit (120) to display; an operation unit (130) configured to conduct an editing operation to the plurality of playlists; and a playlist editing unit (140) configured to edit the plurality of playlists according to the operation of the operation unit (130), in which the playlist editing unit (140) is configured to edit including transferring the contents information between the playlists, combining the plurality of playlists, and transferring the contents information from a tracklist to one of the playlists.

## Description

### TECHNICAL FIELD

The present invention relates to a contents selection device configured to select desired contents from a playlist, a control method of the contents selection device, and a program for the contents selection device.

### BACKGROUND ART

For instance, Patent Literature 1 is known for disclosing this kind of technology. Patent Literature 1 discloses preparing a playlist suited to a user's preference and proposing the playlist to the user. Thus, in general (including Patent Literature 1), only one playlist is displayed on a display screen.

DJ devices are known as a representative electronic device on which the playlist is displayed. A DJ (Disc Jockey) selects music to be played during a performance at a spot and in a preparation work before the performance. For instance, the DJ selects music within his given time during the performance in consideration of a performance sequence such as (1) music to be replayed immediately after the DJ replaces a previously performing DJ, (2) music for gradually bringing excitement to audience, (3) music to be replayed at a peak of the excitement, and (4) music to be replayed before the DJ is replaced by a next DJ.

### CITATION LIST

### PATENT LITERATURE(S)

Patent Literature 1: JP-A-2010-267335

### SUMMARY OF THE INVENTION

### PROBLEM(S) TO BE SOLVED BY THE INVENTION

When pieces of music to be replayed at the timings of the above (1) to (4) are bundled in a single playlist, too many pieces of music are included therein, so that a desired piece of music is difficult to find. On the other hand, when the pieces of music to be replayed at the timings of the above (1) to (4) are divided into separate playlists, a switching operation of the playlists is required during the performance, which complicates the operation. Particularly, since the DJ has to select music suited to a mood at the spot without interrupting the music while performing an effect operation (e.g., scratch operation), the operation of switching the playlists becomes a big burden to the DJ.

In light of the above problem, an object of the invention is to provide a contents processing device configured to allow a DJ to efficiently select music during a performance and in a preparatory work, a processing method of the contents processing device, and a program therefor.

### MEANS FOR SOLVING THE PROBLEM(S)

According to an aspect of the invention, a contents selection device includes: a playlist display configured to display a plurality of playlists on a single screen, each of the playlists including contents information regarding contents.

In the above arrangement, the contents selection device further includes an editing unit configured to edit the plurality of playlists.

In the above arrangement, the editing unit is configured to add any one of the contents information of any one of the playlists to any position in any one of the rest of the playlists.

In the above arrangement, the contents selection device further includes a tracklist display configured to display a tracklist including the contents information regarding contents not included in the playlists, the tracklist display being displayed on the same screen where the plurality of playlists are displayed, in which the editing unit is configured to add any one of the contents information in the tracklist to any position in any one of the playlists.

In the above arrangement, the editing unit is configured to prepare a combined playlist in which the plurality of playlists are combined.

In the above arrangement, the contents selection device further includes an operation unit, in which the editing unit is configured to edit the playlists according to an operation of the operation unit.

In the above arrangement, the contents selection device further includes a display controller configured to switch between a plural display mode for displaying the plurality of playlists and a combined display mode for displaying the combined playlist.

In the above arrangement, the playlist includes a list name area for displaying a list name and a contents information area for displaying the contents information, in which the display controller is configured to switch between a list name display mode for displaying only the list name area and an entire display mode for displaying the list name area and the content information area.

In the above arrangement, the display controller is configured to control the tracklist display to display all contents information including the list name area in the playlist in response to a selection operation on the list name area.

In the above arrangement, the contents selection device further includes a bank storage configured to store a plurality of playlist banks, each of which includes the plurality of playlists displayed on the single screen, in which the display controller is configured to control the playlist display to display the plurality of playlists included in any one selected from the plurality of playlist banks.

In the above arrangement, the contents selection device further includes an output selection unit configured to select one output mode from a collective output of the plurality of playlist banks, an output of one or more of the playlist banks and an output of one or more of the playlists, which are stored in the bank storage; and an output unit configured to output information according to the output mode selected by the output selection unit.

According to another aspect of the invention, a control method of a contents selection device includes: executing a playlist display step of displaying a plurality of playlists on a single screen, each of the playlists including contents information regarding contents.

According to still another aspect of the invention, a program executes the control method of the contents selection device according to the above aspect of the invention by a computer.

### BRIEF DESCRIPTION OF DRAWING(S)

Fig. 1 illustrates a system configuration of a DJ system according to an exemplary embodiment of the invention.
Fig. 2 illustrates an example of a GUI layout according to a DJ application.
Fig. 3 illustrates an enlarged display example of an individual playlist area.
Fig. 4 is a block diagram showing a functional configuration of a PC.
Fig. 5 illustrates a display example in which a tracklist display is hidden.
Fig. 6 illustrates a display example in which only one playlist is displayed on the playlist display.
Fig. 7 illustrates a display example of a combined playlist.
Fig. 8 illustrates a display example in which a contents information area of the playlist is hidden.

### DESCRIPTION OF EMBODIMENT(S)

A contents selection device, a control method of the contents selection device and a program therefor according to an exemplary embodiment of the invention will be described in details below with reference to the attached drawings. In the exemplary embodiment, the contents selection device is applied to a DJ system SY. The contents are exemplified by music contents (audio contents).

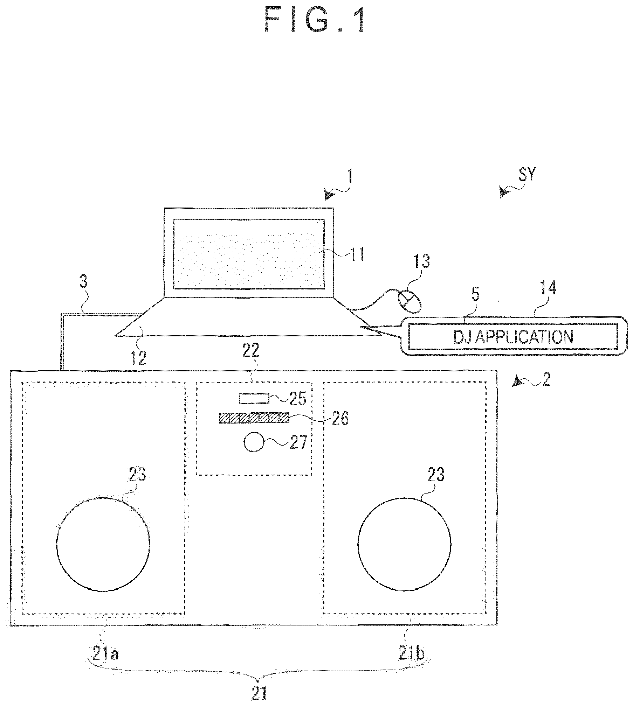

Fig. 1 illustrates a system configuration of the DJ system SY according to the exemplary embodiment of the invention. The DJ system SY is a group of devices used for a performance by a DJ and includes a PC (Personal Computer) 1, a DJ controller 2, and a dedicated line 3 connecting the PC 1 to the DJ controller 2. It should be noted that the dedicated line 3 may be wired or wireless. Moreover, the PC 1 may be connected to the DJ controller 2 using a network such as LAN.

The PC 1 includes the same hardware as that of a typical computer, such as a display 11, a keyboard 12, a mouse 13, and a hard disk drive 14. Moreover, a DJ application 5 is installed in the hard disk drive 14. The DJ application 5 is used not only for the performance at the spot but also for a preparation work before the performance. In the exemplary embodiment, music selection (i.e., display and edition of a playlist) during the performance and in the preparation work will be mainly described. It should be noted that only PC 1 is used in the preparation work. In the preparation work, a music selection operation and an editing operation are conducted using the keyboard 12 and the mouse 13 of the PC 1.

The DJ controller 2 is a device for operating the DJ application 5 and includes a player 21 provided by two right and left players 21a and 21b each including a jog dial 23. The DJ controller 2 includes a music selection operation unit 22 for conducting a music selection operation during the performance, in the middle of the DJ controller 2.

The music selection operation unit 22 includes operational terminals such as a push button 25, a touch panel 26, and a rotary encoder 27. The operational terminals are used for the music selection operation from the playlist, the editing operation of the playlist, operations of starting and stopping replaying (listening on trial) the selected music, and the like.

Although a detailed configuration of the DJ controller 2 with respect to other components is not shown, the DJ controller 2 has a typical configuration (e.g., faders, knobs, a display screen, and input/output interfaces).

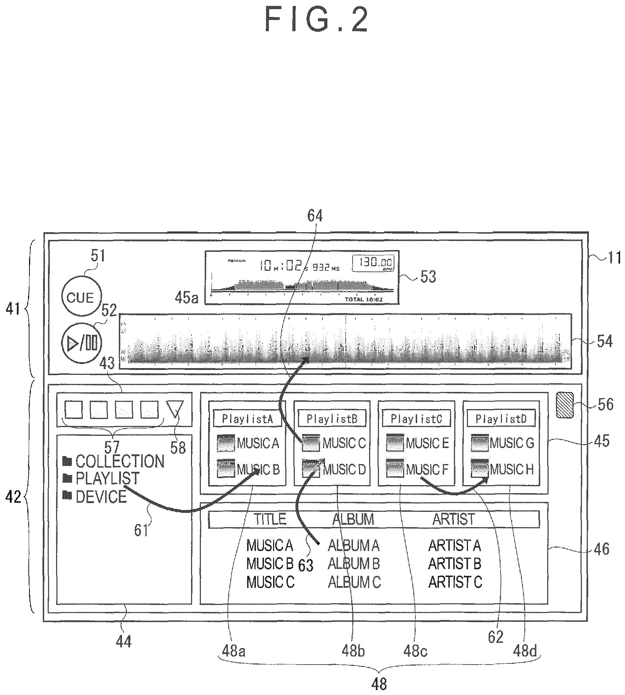

Next, referring to Fig. 2, a GUI (Graphical User Interface) to be displayed on the display 11 of PC 1 during the performance and in the preparation work will be mainly described. The GUI is displayed as one of functions of the DJ application 5. As shown in Fig. 2, the GUI includes a player display 41 and a browser 42.

The player display 41 includes a cue button 51, a replay/pause button 52, a first player display area 53, and a second player display area 54. During the replay of music, the first player display area 53 displays an elapsed time, BPM (Beats Per Minute), an entire waveform, and the like of the music. The second player display area 54 displays an enlarged waveform, a beat grid and the like of the music being replayed.

The browser 42 includes a switching button display 43, a folder display 44, a playlist display 45, and a tracklist display 46. Moreover, a combining button 56 for combining a plurality of playlists displayed on the playlist display 45 is disposed at a right side of the playlist display 45. Details are described later. Although Fig. 2 shows that the tracklist display 46 is displayed below the playlist display 45, the tracklist display 46 may be positioned inversely.

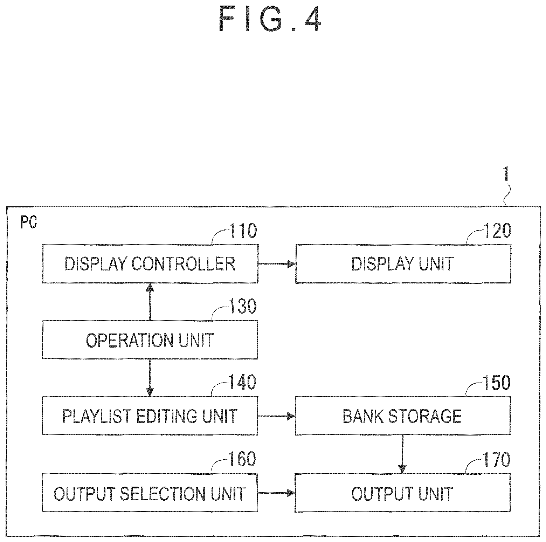

The switching button display 43 displays four bank switching buttons 57 and one display switching button 58. The bank switching buttons 57 are buttons for switching playlist banks to be displayed on the playlist display 45. In the exemplary embodiment, the playlist display 45 can display four playlists at the maximum. The maximum four playlists can be stored as a single playlist bank (bank storage 150, see Fig. 4). Moreover, four playlist banks at the maximum can be stored. The bank switching buttons 57 respectively correspond to the playlist banks. When one of the playlist banks is selected, the maximum four playlists included in the selected playlist bank are displayed on the playlist display 45. The display switching button 58 is a button for switching between a display of only list names of each of the playlists and a display of both of the list names and contents information.

The folder display 44 analyzes music files in the PC 1 and displays, in a tree diagram, a music collection registered in the DJ application 5, a previously prepared playlist, a readable memory device and the like.

The playlist display 45 displays one to four playlists included in the playlist bank selected by the bank switching button 57. The playlist means a sequential music list and includes a path of each of music files and sequential information indicating a replay sequence. The display on the playlist display 45 is in a form of a list with row(s) of contents information related to music in each of columns of contents information of the playlists.

The playlists displayed on the playlist display 45 are each independent. For instance, when a "playlist A" and a "playlist B" are present, a replay sequence in each of the playlists is determined as 1, 2 etc. No priority in the sequence is put between the "playlist A" and the "playlist B." Moreover, the "playlist A" and the "playlist B" may include music in common. Further, the music lists having the same contents or the music lists having the same contents but different music sequences may define the "playlist A" and the "playlist B." Hereinafter, a display area of each of the playlists displayed on the playlist display 45 is referred to as an "individual playlist area 48 (48a, 48b, 48c, 48d)."

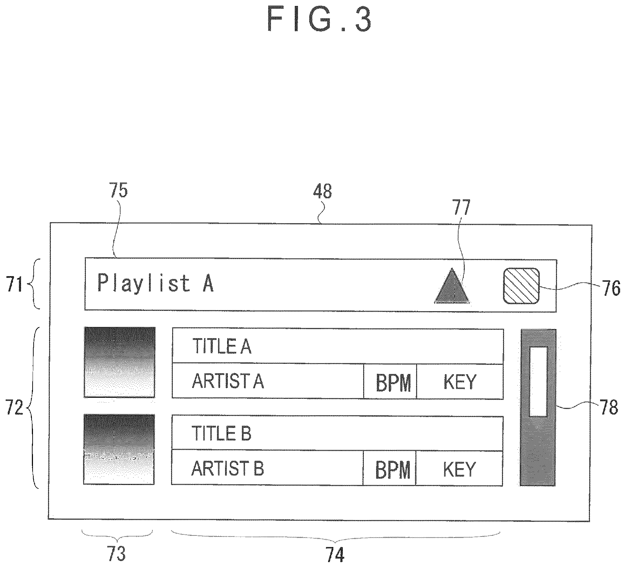

Fig. 3 shows an enlarged individual playlist area 48. The individual playlist area 48 is longitudinally divided into a list name area 71 and a contents information area 72. The list name area 71 displays a list name 75, a context menu button 76, and a sort icon 77. The list name 75 can be edited as needed by operating the keyboard 12 and the like.

When a selection operation is conducted on the context menu button 76 by a user (for instance, when a left-clicking operation is conducted by operating the mouse 13 with a cursor positioned on the context menu button 76), a pop-up window including two choices of "sorting" and "removing from the playlist display unit" is displayed. When the "removing from the playlist display unit" is selected, the corresponding individual playlist area 48 is hidden. However, the playlist itself is not deleted from the playlist bank. When the "sorting" is selected, choices of sorting conditions are further displayed. The choices may be an alphabetical sequence of titles and artists, a BPM sequence, a key sequence and the like. When any one of the choices is selected at this time, the contents information area 72 is sorted according to the selected condition. When the sorting is conducted, the sort icon 77 is switched from an OFF display to an ON display.

The contents information area 72 lists the contents information of music and is laterally divided into an artwork display area 73 and a composite column area 74. A scroll bar 78 is provided at a right end of the contents information area 72 and configured to scroll each of the contents information.

The artwork display area 73 displays artworks of the music (e.g., an image of an album jacket). Although not particularly shown, a mark indicating that music is being replayed is superimposed on an artwork of the music. Moreover, a mark indicating that a music file is missing is also superimposed on a relevant artwork.

The composite column area 74 compactly displays the contents information such as the title, artist name, BPM and keys in a composite column in two lines. It should be noted that the composite column may additionally display the album name, tag information added to the music, and the like. Moreover, which information to be displayed in the composite column can be set by an environmental setting. It should be noted that the environmental setting is common to all the playlists to be displayed on the playlist display 45.

Referring back to Fig. 2, the description is continued. The tracklist display 46 displays a music list of uncategorized music, which are analyzed and registered in the DJ application 5 but not included in the playlists, and a playlist(s) selected from a plurality of playlists displayed on the playlist display 45. Moreover, filtering using a search window and a categorizing filter for displaying the music in different categories are usable in the tracklist display 46. Such filter functions cannot be used in the playlist display 45.

Moreover, as shown in Fig. 2, the tracklist display 46 has the same lateral width as that of the playlist display 45. The tracklist display 46 can laterally display about four times as much information as the individual playlist area 48 showing four individual playlist areas 48a, 48b, 48c, 48d. Accordingly, the contents information relating to music is displayed in one line. Although the title, album and artist are displayed in text as the contents information in the example shown in Fig. 2, the music analysis information (e.g., BPM and keys), the tag information and the like may be additionally displayed. Moreover, a music waveform may be displayed as a part of the contents information. Further, items of the contents information displayed on the tracklist display 46 may be in common with those of the composite column of the playlist display 45.

An editing operation of the playlist executable on the GUI will be described. For instance, as shown by an arrow of a sign 61, a desired playlist can be assigned from the folder display 44 to the playlist display 45. Four playlists may be added at the maximum. A further addition may be impossible while the four playlists are displayed. Alternatively, when a playlist is added while the four playlists are displayed, the added playlist may replace one of the currently displayed playlists.

As shown by an arrow of a sign 62, any contents information displayed in any one of the playlists may be added (transferred or copied) to any position of the rest of the playlists. Moreover, although not particularly shown in the drawing, a display position of the contents information (replaying sequence of the music) may be exchanged even in the same playlist. Moreover, it is possible to delete the contents information from the playlist and exchange the display positions of the playlists (position of the individual playlist area 48).

As shown by an arrow of a sign 63, any contents information displayed in the tracklist display 46 can be added (transferred or copied) to any position of any one of the playlists in the playlist display 45. Although not particularly shown in the drawing, when a blank playlist is present in the playlist display 45, a new playlist can be made by adding music from the tracklist display 46. Edition results of the playlists shown by the signs 61 to 63 are reflected in data of the playlist bank (i.e., data of the edited playlists are recorded).

As shown by an arrow 64, music in the playlist display 45 can be loaded in the player display 41 and replayed. Moreover, although not particularly shown in the drawing, when any music is selected in the playlist display 45 or the tracklist display 46, the selected music can be replayed (listened on trial). An operation method as shown by the signs 61 to 64 in Fig. 2 may be exemplified by a drag-and-drop operation using the mouse 13 or the touch panel 26.

Next, a functional configuration of the PC 1 will be described with reference to Fig. 4. The PC 1 includes a display controller 110, a display unit 120, an operation unit 130, a playlist editing unit 140, a bank storage 150, an output selection unit 160, and an output unit 170, as the primary functional configuration. All of the above units are realized using the DJ application 5.

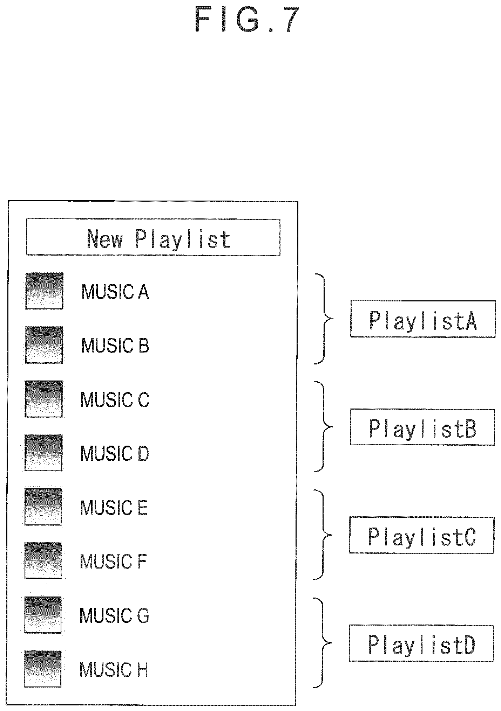

The display controller 110 controls a display operation of the display unit 120. The display unit 120 displays the GUI shown in Fig. 2 and including the player display 41, the switching button display 43, the folder display 44, the playlist display 45, and the tracklist display 46. Among the above, the playlist display 45 displays a plurality of playlists in a predetermined area as shown in Fig. 2 (plural display mode). Moreover, when the combining button 56 is pressed, a combined playlist provided by combining the plurality of playlists is displayed (combined display mode, see Fig. 7).

The operation unit 130 conducts various operations such as the switching of the display modes, the switching of the playlist banks, the editing operation of the playlists as shown by the signs 61 to 63, and the replaying operation as shown by the sign 64. For instance, in response to the operation of the operation unit 130, the display controller 110 switches between the plural display mode for displaying the plurality of playlists and the combined display mode for displaying the combined playlist. Moreover, in response to the operation of the operation unit 130, the display controller 110 switches between a list name display mode for displaying only the list name area 71 of the playlists and an entire display mode for displaying the list name area 71 and the contents information area 72 (see Fig. 3). Further, in response to the selection operation of the list name area 71 by the operation unit 130, the display controller 110 displays all contents information in the playlists including the list name area 71 on the tracklist display 46 (details will be described later).

The playlist editing unit 140 corresponds to an "editing unit" in the claims and conducts various editions such as the edition of the contents information in the playlists. For instance, as shown by the sign 62 in Fig. 2, the playlist editing unit 140 adds any contents information in any one of the playlists to any position in the other playlist or the same playlist. Moreover, as shown by the sign 63, the playlist editing unit 140 adds any contents information in the tracklist display 46 to any position of any playlist in the playlist display 45. Further, in response to the operation of the combining button 56, the playlist editing unit 140 prepares the combined playlist in which the plurality of playlists are combined.

The bank storage 150 stores a plurality of playlist banks each including the plurality of playlists displayed on the playlist display 45. Moreover, the bank storage 150 stores edition results of the playlist display 45 in a non-volatile manner to retrieve the last display at the end of the DJ application 5 also when PC1 is driven next time. The display controller 110 controls the playlist display 45 to display the plurality of playlists included in any playlist bank selected by the operation unit 130 from the playlist banks.

The output selection unit 160 selects one of a "collective output of the plurality of playlist banks," an "output of one(s) of the playlist banks" and an "output of one(s) of the playlists" which are stored in the bank storage 150. When the "output one(s) of the playlist banks" is selected, the output selection unit 160 further selects one of to-be-outputted playlist bank(s) from the plurality of playlist banks. Likewise, when the "output one(s) of the playlists" is selected, the output selection unit 160 further selects one of to-be-outputted playlist(s) from the plurality of playlists. According to the selection by the output selection unit 160, the output unit 170 outputs information stored in the bank storage 150. Conceivably, an information output destination is exemplified by a memory detachable from PC 1 and an electronic device (e.g., a player) connectable to PC 1.

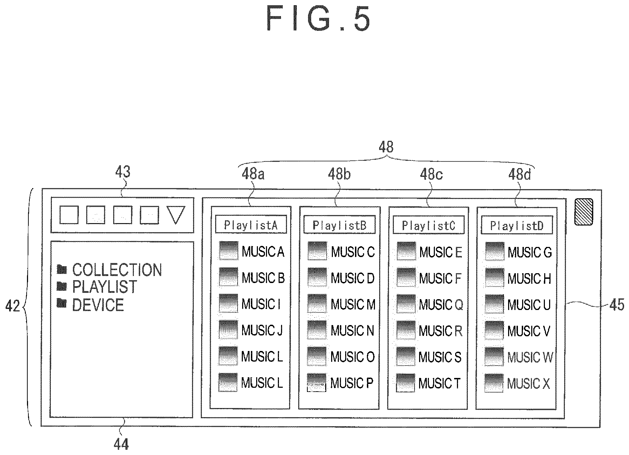

Next, the display controller 110 and the playlist editing unit 140 will be supplementally described with specific display examples with reference to Figs. 5 to 8. For instance, Fig. 5 illustrates a display example in which the tracklist display 46 is hidden. The operation unit 130 is configured to switch the tracklist display 46 between being displayed and being hidden using a switch button (not shown) or by an environmental setting. As shown in Fig. 5, when the tracklist display 46 is hidden, an area (i.e., longitudinal length) for each of the individual playlist areas 48a, 48b, 48c, 48d is widened. Accordingly, more contents information can be displayed on a single screen, so that the music selection operation can be efficiently conducted.

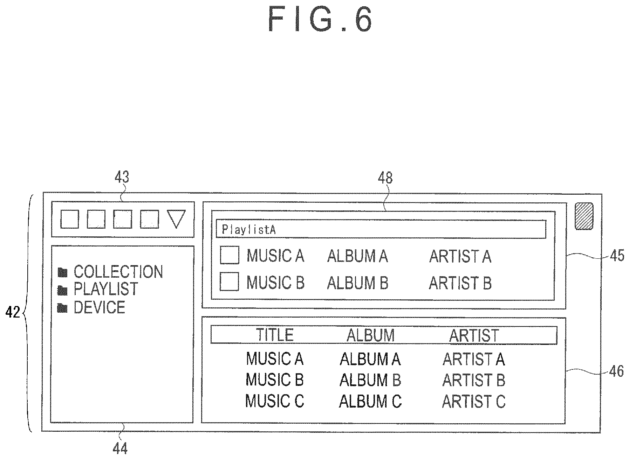

Fig. 6 illustrates a display example in which only one playlist is displayed on the playlist display 45. At this time, since a display width (i.e., a lateral length) of the individual playlist area 48 is widened, the contents information area 72 is provided in a single line display format instead of a composite column display format. Moreover, although not particularly shown, when two individual playlists are displayed, the contents information area 72 is also provided in the single line display format. It should be noted that the operation unit 130 may be configured to select one of the composite column display format and the single line display format for the playlist display 45 irrespective of the number of the playlists to be displayed on the playlist display 45.

Fig. 7 shows a display example of a combined playlist. When the combining button 56 (see Fig. 2) is pressed while four playlists of "Playlist A" to "Playlist D" are displayed on the playlist display 45, a combined playlist in which all music in all the playlists are sequenced according to a sequence of the playlists (e.g., music (music A, music B) included in Playlist A, followed by music (music C, music D) included in Playlist B, etc). At this time, the folder display 44 prepares a new playlist at a hierarchical level just below a folder of the playlists. All music in a currently selected playlist bank are registered in the new playlist. The context menu button 76 (see Fig. 3) may be displayed also in the combined playlist, and configured to sort the combined playlist according to sorting conditions selected by the user. Moreover, when the same two pieces of music are consecutively present by the sorting, only one music may be deleted from the playlist while the other music is left.

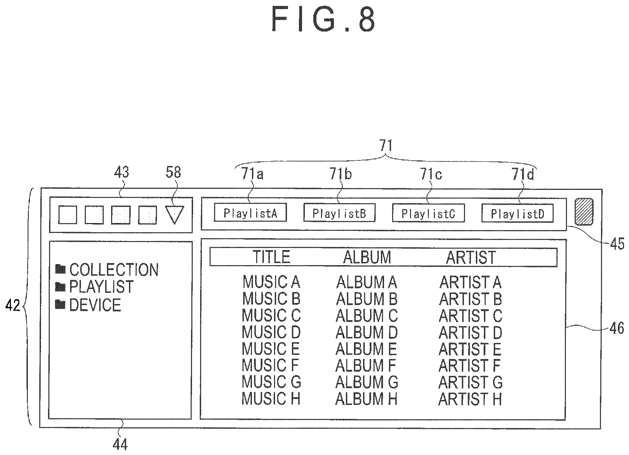

Fig. 8 illustrates a display example in which the contents information area 72 of the playlist (see Fig. 3) is hidden by pressing the display switching button 58. Since the contents information area 72 is hidden, the area (i.e., a longitudinal length) of the tracklist display 46 can be widened. It should be noted that, by the selection operation of the list name areas 71a, 71b, 71c, 71d of each of the playlists, all contents information in each of the playlists including the list name area 71 can be displayed (jumped) on the tracklist display 46. By this operation, the contents information of each of the playlists can be checked in a wider area. Moreover, since the contents information is displayed on the tracklist display 46, filtering using a search window and a categorizing filter are usable. The contents information can be transferred and displayed by selecting the list name area 71 regardless of whether the contents information area 72 is displayed or hidden (the state of the display switching button 58).

According to the exemplary embodiment, since the plurality of playlists can be simultaneously displayed on the playlist display 45 as described above, the user (DJ) can immediately understand more pieces of music. Accordingly, music selection can be efficiently conducted during a performance at a spot and in a preparation work. Moreover, since the contents information can be deleted and the music sequence can be changed in each of the playlists and music can be transferred between the playlists, the playlists is easily editable. Moreover, since the plural display mode of displaying a plurality of playlists and the combined display mode of displaying the combined playlist in which a plurality of playlists are combined can be switched therebetween on the playlist display 45, convenience is further enhanced.

Moreover, since the tracklist display 46 is provided on the same screen as the playlist display 45, the playlists can be transferred to be displayed and the filter function can be used. Further, the contents information can be added (transferred or copied) from the tracklist display 46 to any one of the playlists in the playlist display 45, so that a new playlist can be prepared.

Modification(s) below can be employed.

In the above exemplary embodiment, the PC used for the preparation work is in common with the PC used for the performance. However, the PCs may be different. In such a case, data prepared in the preparation work may be stored in a memory (e.g., a USB device) and applied to a device used for the performance. During the performance, the PC 1 and the DJ controller 2 may be replaced by a DJ player (a replay device dedicated for DJ). In such a case, the GUI shown in Fig. 2 or a part (i.e., playlist display 45) of the GUI is displayed on a display screen of the DJ player. Moreover, the GUI or the part thereof may be displayed on a display screen of a DJ mixer (a DJ device for mixing and replaying a plurality of pieces of music) in addition to the DJ player.

In the above exemplary embodiment, the filter function is not workable on the playlist display 45. However, the filter function may be used on both of the playlist display 45 and the tracklist display 46.

Each configuration of the DJ system SY (PC1) can be provided in a form of a program. Moreover, the program may be stored in various memories (e.g., CD-ROM and flash memory). In other words, the program for functioning each componentof the DJ system SY of the computer and the memory in which the program is stored are encompassed in the scope of the invention.

In the above exemplary embodiment, the contents processing device of the invention is exemplarily applied to the DJ system SY, but may also be applied to a replay device (e.g., CD/DVD player) other than the DJ device and various electronic devices. The contents are exemplified by the music contents. However, the invention may be applied to an electronic device for other contents (e.g., video contents). Moreover, the invention can be modified as desired without departing from the scope of the invention.

### EXPLANATION OF CODE(S)

- 1:: PC
- 2:: DJ controller
- 3:: dedicated line
- 5:: DJ application
- 21:: player
- 22:: music selection operation unit
- 23:: jog dial
- 25:: stop button
- 26:: touch panel
- 27:: rotary encoder
- 41:: player display
- 42:: browser
- 43:: switching button display
- 44:: folder display
- 45:: playlist display
- 46:: tracklist display
- 48:: individual playlist area
- 51:: cue button
- 52:: pause button
- 53:: first player display area
- 54:: second player display area
- 56:: combining button
- 57:: bank switching button
- 58:: display switching button
- 71:: list name area
- 72:: contents information area
- 73:: artwork display area
- 74:: composite column area
- 75:: list name
- 76:: context menu button
- 77:: sort icon
- 78:: scroll bar
- 110:: display controller
- 120:: display unit
- 130:: operation unit
- 140:: playlist editing unit
- 150:: bank storage
- 160:: output selection unit
- 170:: output unit
- SY:: DJ system

## Claims

1. A contents selection device comprising:
a playlist display configured to display a plurality of playlists on a single screen, each of the playlists which is a list of contents information regarding contents.

2. The contents selection device according to claim 1, further comprising: an editing unit configured to edit the plurality of playlists.

3. The contents selection device according to claim 2, wherein
the editing unit is configured to add any one of the contents information of any one of the playlists to any position in any one of the rest of the playlists.

4. The contents selection device according to claim 2, further comprising:
a tracklist display configured to display a tracklist comprising the contents information regarding contents not included in the playlists, the tracklist display being displayed on the same screen where the plurality of playlists are displayed, wherein
the editing unit is configured to add any one of the contents information in the tracklist to any position in any one of the playlists.

5. The contents selection device according to claim 4, wherein
the editing unit is configured to prepare a combined playlist in which the plurality of playlists are combined.

6. The contents selection device according to any one of claims 2 to 5, further comprising an operation unit, wherein
the editing unit is configured to edit the playlists according to an operation of the operation unit.

7. The contents selection device according to claim 5, further comprising:
a display controller configured to switch between a plural display mode for displaying the plurality of playlists and a combined display mode for displaying the combined playlist.

8. The contents selection device according to claim 7, wherein
the playlist comprises a list name area for displaying a list name and a contents information area for displaying the contents information, wherein
the display controller is configured to switch between a list name display mode for displaying only the list name area and an entire display mode for displaying the list name area and the content information area.

9. The contents selection device according to claim 8, wherein
the display controller is configured to control the tracklist display to display all contents information including the list name area in the playlist in response to a selection operation on the list name area.

10. The contents selection device according to claim 7, further comprising:
a bank storage configured to store a plurality of playlist banks, each of which comprises the plurality of playlists displayed on the single screen, wherein
the display controller is configured to control the playlist display to display the plurality of playlists included in any one selected from the plurality of playlist banks.

11. The contents selection device according to claim 10, further comprising:
an output selection unit configured to select one output mode from a collective output of the plurality of playlist banks, an output of one or more of the playlist banks and an output of one or more of the playlists, which are stored in the bank storage; and
an output unit configured to output information according to the output mode selected by the output selection unit.

12. A control method of a contents selection device comprising: executing a playlist display step of displaying a plurality of playlists on a single screen, each of the playlists comprising contents information regarding contents.

13. A program for executing the control method of the contents selection device according to claim 12 by a computer.
